# EUROPEAN PATENT APPLICATION

(11) **EP 4 553 698 A1**
(43) Date of publication of application: **14.05.2025**
(21) Application number: 23216147.1
(22) Date of filing: 13.12.2023
(51) Int. Cl.: G06F 40/56, G06F 40/205, G06F 40/30, G06N 3/02

(54) **TOKEN OPTIMIZATION THROUGH MINIMIZED PAYLOAD FOR LARGE LANGUAGE MODELS**

(30) Priority: 10.11.2023 US 202318388686
(71) Applicant: SAP SE, 69190 Walldorf (DE)
(72) Inventor: KUNZ, David, 69190 Walldorf (DE)
(74) Representative: Müller-Boré & Partner Patentanwälte PartG mbB

(57) **Abstract**

In an example embodiment, a solution is provided by utilizing an intermediate file format for either an input prompt to or output from a large language model (LLM) (or both). This intermediate file format is one that has the property of being minimizable, meaning that tokens contained in a file of that intermediate file format can be stripped out or otherwise removed without changing the semantic meaning of the file. The input prompt can be created in or converted to this intermediate file format and then minimized prior to being sent to the LLM for text generation. Furthermore, a system message included with the input prompt may instruct the LLM to generate text in the intermediate file format, in minimized form. A specialized parser may then be included to parse the minimized output produced by the LLM.

## Description

### TECHNICAL FIELD

This document generally relates to computer systems. More specifically, this document relates to use of large language models.

### BACKGROUND

A large language model (LLM) refers to an artificial intelligence (AI) system that has been trained on an extensive dataset to understand and generate human language. These models are designed to process and comprehend natural language in a way that allows them to answer questions, engage in conversations, generate text, and perform various language-related tasks.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for automatically generating text from natural language text, in accordance with an example embodiment.
Figure 2 is a flow diagram illustrating a method for automatically generating text from natural language text, in accordance with an example embodiment.
Figure 3 is a block diagram illustrating an architecture of software, which can be installed on any one or more of the devices described above.
Figure 4 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

When using LLMs to generate text, the amount of input tokens fed to the LLM and the amount of output tokens generated by the LLM can affect both cost and performance. On the input side, tokens are generally used as input to LLMs to help provide context for the LLM to generate the text. The result is more robust if the user provides more guidance, such as by specifying the desired data structure with examples or specifications.

LLMs have absolute limits on the number of input tokens they will accept (e.g., no more than 500 tokens). The result is that it is beneficial to limit the number of input tokens passed to an LLM when requesting text generation. This can be technically challenging to accomplish, however, without sacrificing the accuracy provided by the extra context of those additional tokens.

Similar issues are encountered with tokens output by the LLM. The more tokens produced by an LLM, the longer the generation process takes, and thus there is often either an upper limit or a toll (in speed or cost) for large numbers of output tokens, or both, just like there is with input tokens. The result is that it is also beneficial to limit the number of output tokens generated by an LLM when performing text generation. This can also be technically challenging to accomplish without sacrificing the accuracy that occurs with generation of the extra context of those additional tokens.

In an example embodiment, a solution is provided by utilizing an intermediate file format for either an input prompt to or output from an LLM (or both). This intermediate file format is one that has the property of being minimizable, meaning that tokens contained in a file of that intermediate file format can be stripped out or otherwise removed without changing the semantic meaning of the file. One example such intermediate file format is Javascript Object Notation (JSON), but others exist as well, such as Extensible Markup Language (XML) and Yet Another Markup Language (YAML). The input prompt can be created in or converted to this intermediate file format and then minimized prior to being sent to the LLM for text generation. Furthermore, a system message included with the input prompt may instruct the LLM to generate text in the intermediate file format, in minimized form. A specialized parser may then be included to parse the minimized output produced by the LLM.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once, and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two sub-models: a generator model that is trained to generate new examples, and a discriminator model that tries to classify examples as either real or generated. The two models are trained together in an adversarial manner (using a zero-sum game according to game theory), until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, though a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another example embodiment, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

The present solution works with any type of GAI model, although an implementation that specifically is used with a GPT model will be described.

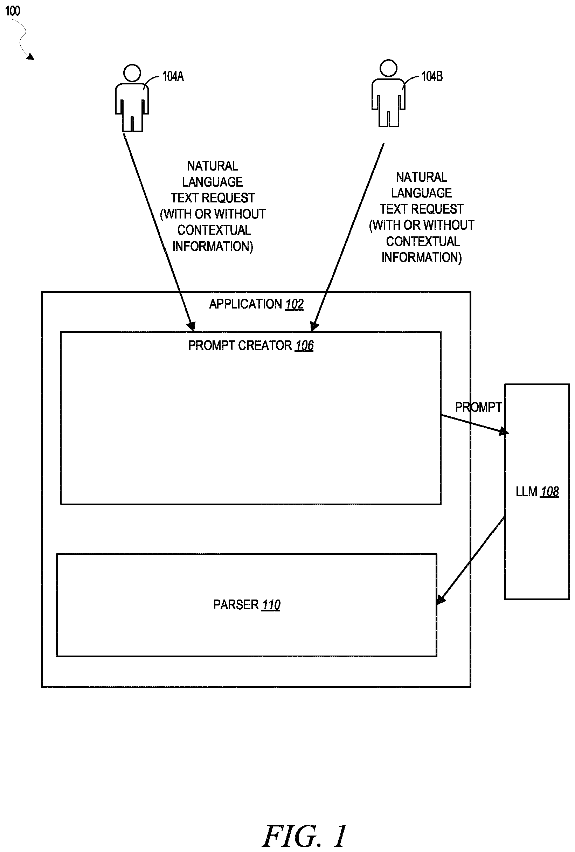

Figure 1 is a block diagram illustrating a system 100 for automatically generating text from natural language text, in accordance with an example embodiment. Here, application 102 provides a mechanism allowing users 104A and 104B, referred to herein as users 104, to request the automated creation of text by providing the application 102 with a natural language text request. In some example embodiments the text that is requested to be created may be computer code, but it is not necessarily limited to that.

Along with the natural language text request, the application 102 may also receive contextual information related to the natural language text request. This contextual information may either be provided as part of the natural language text request, as separate information from the user 104 (in the same communication as or in a different communication from the natural language text request), or accessed or otherwise obtained by the application 102 itself.

The application 102 includes a prompt creator 106. The prompt creator 106 acts to take the natural language text request and, optionally, the contextual information (if provided separately from the natural language text request) and create an LLM prompt from them. This may include appending a system message to the natural language text request and optionally the contextual information. In an example embodiment, some part of this prompt, whether it be from the natural language text request, the contextual data, or the system message (or any combination thereof), may be created in or converted to the intermediate file format, in minimized form. Thus, for example, the system message may include a portion written in the intermediate file format in minimized form (e.g., with spaces, slashes, and carriage returns removed). Alternatively, the contextual information may be converted into a minimized form of the intermediate file format. Alternatively, the natural language text request can be converted into the intermediate file format in some non-minimized form (e.g., with spaces and carriage returns present), and then that file can be converted into minimized form.

Regardless of how it is performed, some portion of the prompt is written in the intermediate file format in minimized form. Thus, when the prompt is then passed to the LLM 108 for processing, the input tokens to the LLM have been minimized, which increase the speed of text generation by the LLM and possibly reduces the cost of the text generation also, in addition to increasing the likelihood that the number of tokens remains under any hard limits imposed by the LLM.

Furthermore, the system 100 is designed to minimize the output tokens generated by the LLM 108. In order for this to be accomplished, the system message may include an instruction that instructs the LLM 108 to return its output in the intermediate file format, in minimized form. Furthermore, in order to be able to understand that returned output, a specialized parser 110 is provided that understands how to parse files in the intermediate file format in minimized form. The parser 110 then parses the returned text from the LLM based on this understanding, producing parsed output.

The following is an example of a system message that may be used for this embodiment:

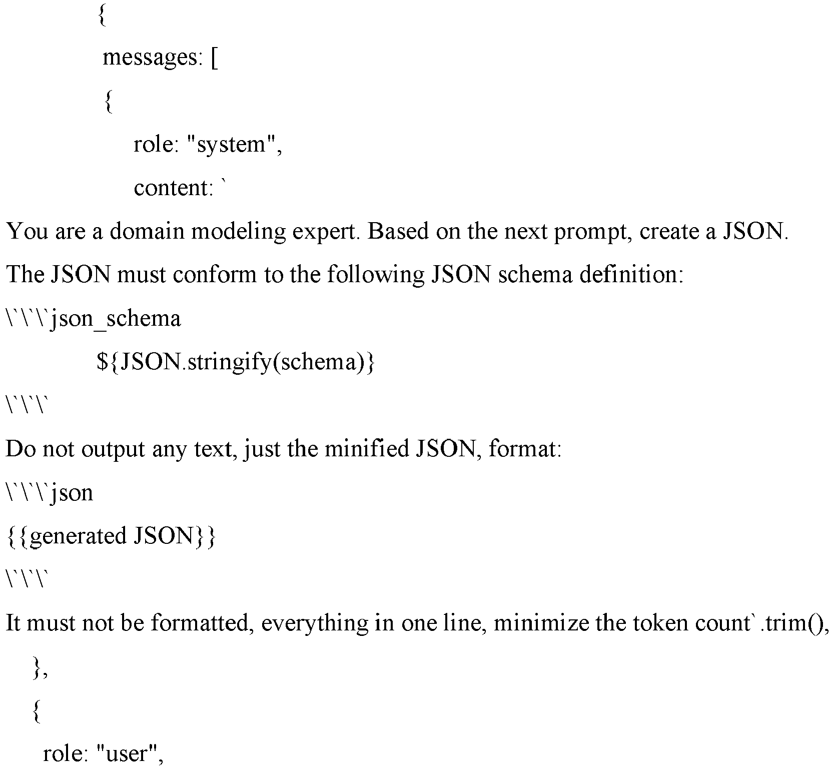

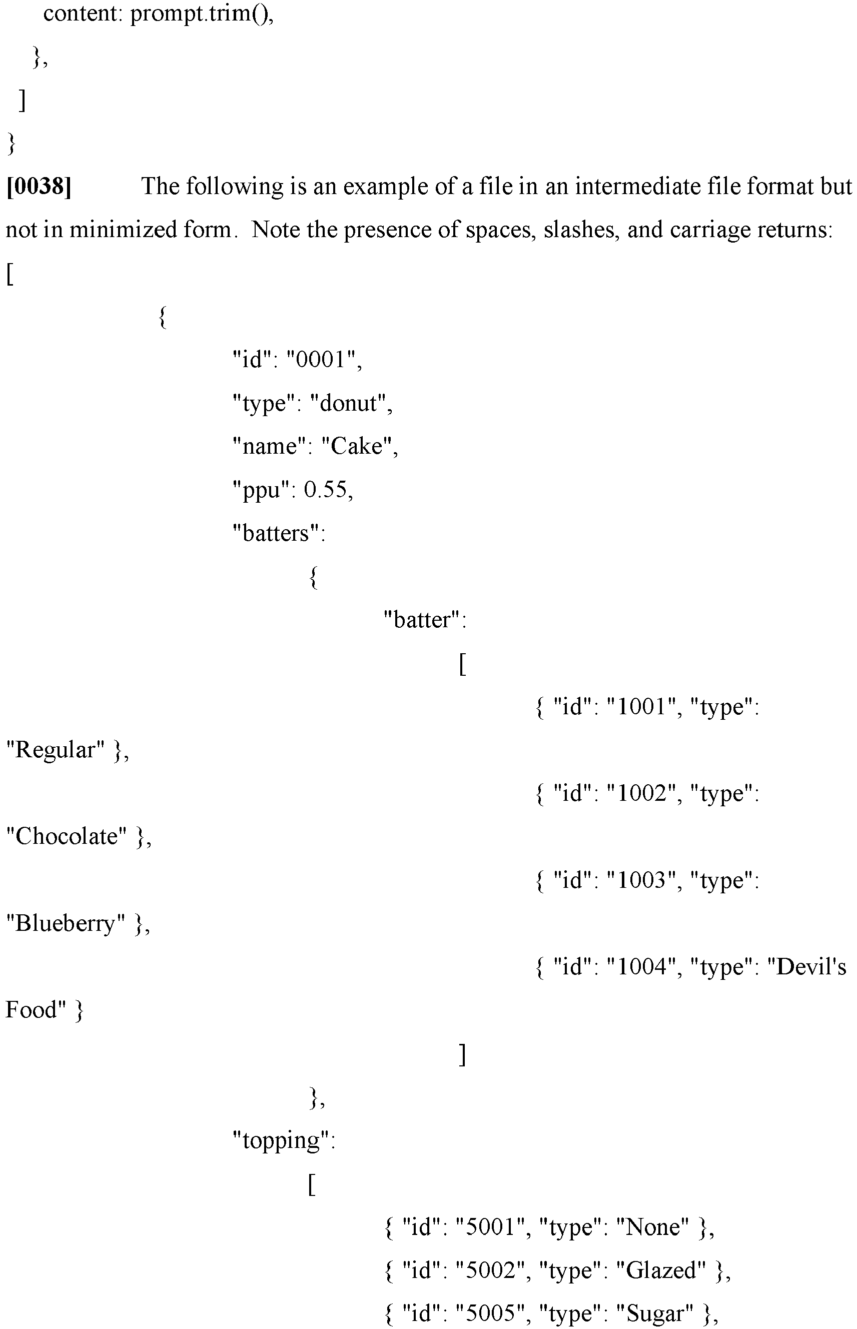

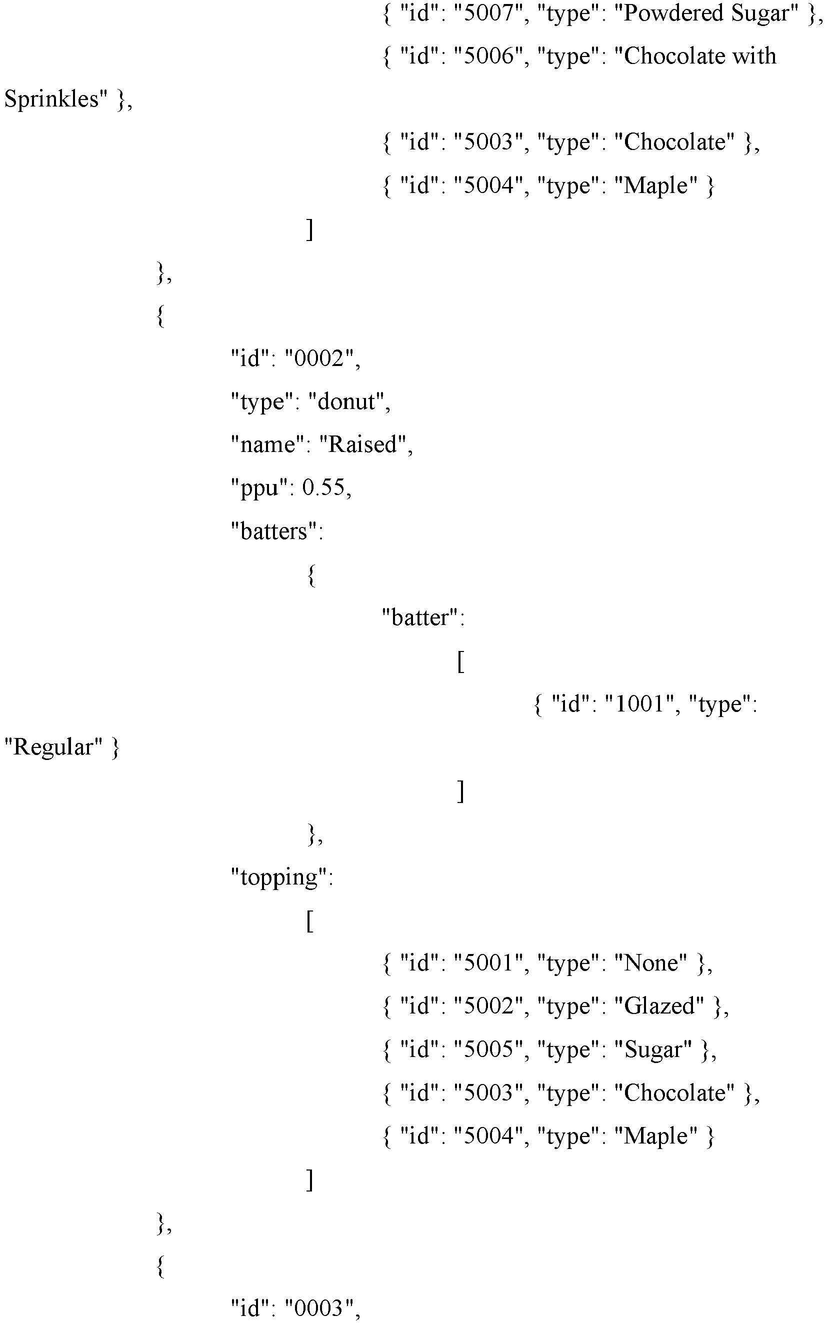

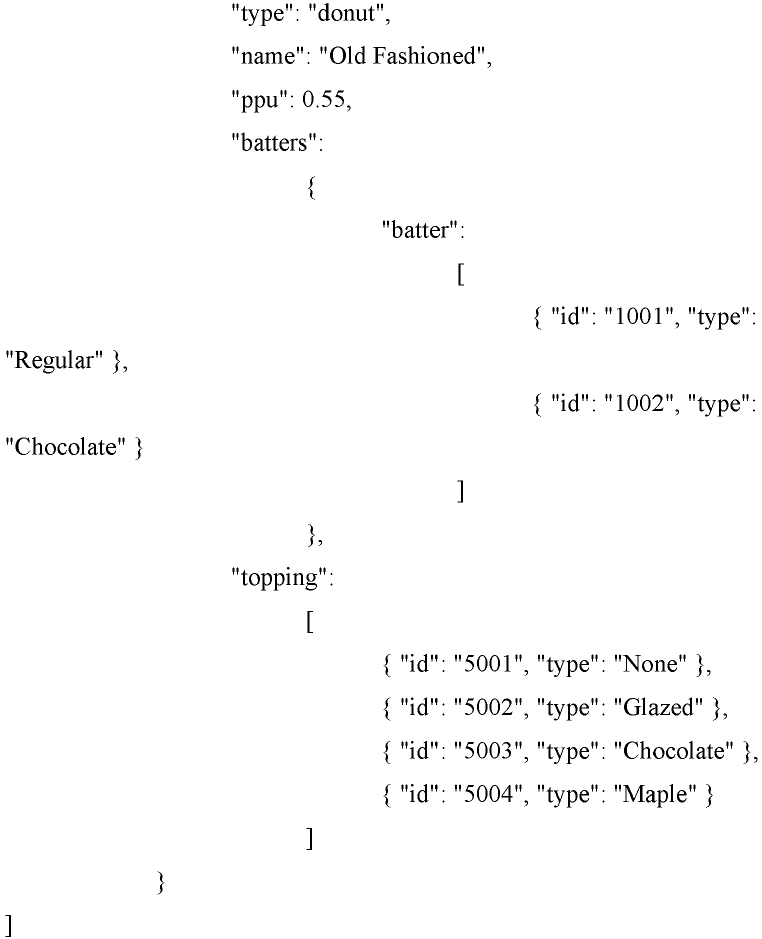

The following is an example of the above file after it has been transformed into a minimized form:
[{"id":"0001","type":"donut","name":"Cake","ppu":0.55,"batters":{"batter":[{"id":" 1001","type":"Regular"},{"id":"1002","type":"Chocolate"},{"id":"1003","type":"Bl ueberry"},{"id":"1004", "type": "Devil's
Food"}]}, "topping": [{ "id":" 5001 ", "type": "None"}, {"id":" 5002", "type": "Glazed"}, { "id": "5005", "type": "Sugar"}, {"id":" 5007", "type": "Powdered Sugar"},{"id":"5006","type": "Chocolate with
Sprinkles" },{"id":"5003","type":"Chocolate"},{"id":"5004","type":"Maple"}]},{"id ": "0002", "type": "donut", "name": "Raised", "ppu" :0.55, "batters": {"batter": [{"id":" 100 1","type":"Regular"}]},"topping":[{"id":"5001","type":"None"},{"id":"5002","type" :"Glazed"},{"id":"5005","type":"Sugar"},{"id":"5003","type":"Chocolate"},{"id":"5 004","type":"Maple"}]},{"id":"0003","type":"donut","name":"Old Fashioned","ppu":0.55,"batters":{"batter":[{"id":"1001","type":"Regular"},{"id":"1 002","type":"Chocolate"}]},"topping":[f"id":"5001","type":"None"},{"id":"5002"," type":"Glazed"},{"id":"5003","type":"Chocolate"},{"id":"5004","type":"Maple"}]}]

It should be noted that the application 102 itself can be located on a user device or may be located centrally on a server that the user interacts with. For the server-based embodiments, the application 102 may, for example, run in the cloud on an application server, so that it is accessible to many different users simultaneously.

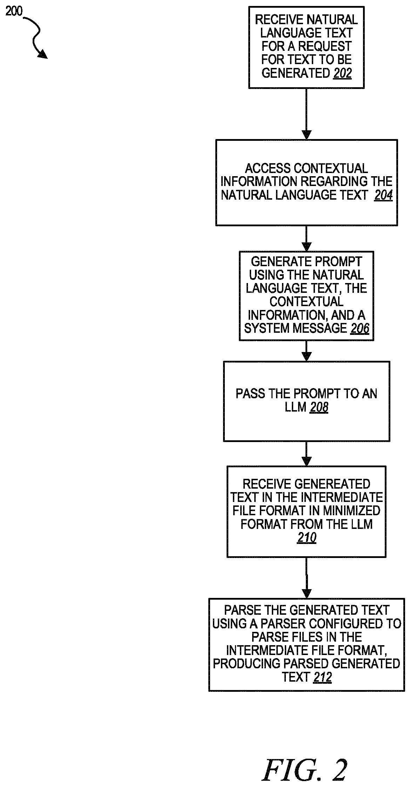

Figure 2 is a flow diagram illustrating a method 200 for automatically generating text from natural language text, in accordance with an example embodiment. At operation 202, a natural language text for a request for text to be generated is received. The natural language text may be the text that is input directly by a user, where the user is specifying using a speak able language (such as English) what text the user would like to be generated. At operation 204, contextual information regarding the natural language text is accessed. This contextual information may either be provided as part of the natural language text request, as separate information from the user (in the same communication as or in a different communication from the natural language text request), or accessed or otherwise obtained by the application itself. The contextual information may be any information that adds additional context to the natural language text, such as information taken from a user profile, articles, videos, audio recordings, usage data, ets.

At operation 206, a prompt is generated using the natural language text, the contextual information, and a system message. The system message includes instructions to produce generated text in an intermediate file format in minimized form, the intermediate file format being a format that enables portions of a file stored in the intermediate file format to be removed without altering semantic meaning of the file.

At operation 208, the prompt is passed to a large language model (LLM). At operation 210, generated text in the intermediate file format in minimized form is received from the LLM. At operation 212, the generated text is parsed using a parser configured to parse files in the intermediate file format, producing parsed generated text.

Parsing a file involves interpreting the file's data following the rules of the file's format. In software context, parsing means to break down a data block into smaller parts and interpret it according to certain rules.

For example, when parsing an XML file, the parser recognizes the markers that denote the beginning and end of elements, the contents of elements, and other structures. The parsing of a file is not affected by adding or removing characters without semantic meaning to or from the file.

In some example embodiments, the generated text is compilable computer code.

In view of the disclosure above, various examples are set forth below. It should be noted that one or more features of an example, taken in isolation or combination, should be considered within the disclosure of this application.

Example 1. A system comprising:
at least one hardware processor; and
a computer-readable medium storing instructions that, when executed by the at least one hardware processor, cause the at least one hardware processor to perform operations comprising:
   receiving natural language text describing a request to generate text;
   accessing contextual information regarding the natural language text;
   generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
   passing the prompt to a large language model (LLM);
   receiving, from the LLM, generated text in the intermediate file format in minimized form; and
   parsing the generated text using a parser configured to parse files in the intermediate file format, producing parsed generated text.

Example 2. The system of Example 1, wherein the generated text is compilable computer code.

Example 3. The system of Examples 1 or 2, wherein the prompt includes at least some text in the intermediate file format in minimized form.

Example 4. The system of Example 3, wherein the LLM has a hard limit on a number of input tokens it will process for a single prompt and the prompt includes fewer tokens than the hard limit due to presence of the at least some text in the intermediate file format in minimized form.

Example 5. The system of any of Examples 1-4, wherein the minimized form includes having no spaces.

Example 6. The system of any of Examples 1-5, wherein the minimized form includes having no carriage returns.

Example 7. The system of any of Examples 1-6, wherein the intermediate file format is Javascript Object Notation (JSON).

Example 8. A method comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
passing the prompt to a large language model (LLM);
receiving, from the LLM, generated text in the intermediate file format in minimized form; and
parsing the generated text using a parser configured to parse files in the intermediate file format, producing parsed generated text.

Example 9. The method of Example 8, wherein the generated text is compilable computer code.

Example 10. The method of Examples 8 or 9, wherein the prompt includes at least some text in the intermediate file format in minimized form.

Example 11. The method of Example 10, wherein the LLM has a hard limit on a number of input tokens it will process for a single prompt and the prompt includes fewer tokens than the hard limit due to presence of the at least some text in the intermediate file format in minimized form.

Example 12. The method of any of Examples 8-11, wherein the minimized form includes having no spaces.

Example 13. The method of any of Examples 8-12, wherein the minimized form includes having no carriage returns.

Example 14. The method of any of Examples 8-13, wherein the intermediate file format is Javascript Object Notation (JSON).

Example 15. A non-transitory machine-readable medium storing instructions which, when executed by one or more processors, cause the one or more processors to perform operations comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
passing the prompt to a large language model (LLM);
receiving, from the LLM, generated text in the intermediate file format in minimized form; and
parsing the generated text using a parser configured to parse files in the intermediate file format, producing parsed generated text.

Example 16. The non-transitory machine-readable medium of Example 15, wherein the generated text is compilable computer code.

Example 17. The non-transitory machine-readable medium of Examples 15 or 16, wherein the prompt includes at least some text in the intermediate file format in minimized form.

Example 18. The non-transitory machine-readable medium of Example 17, wherein the LLM has a hard limit on a number of input tokens it will process for a single prompt and the prompt includes fewer tokens than the hard limit due to presence of the at least some text in the intermediate file format in minimized form.

Example 19. The non-transitory machine-readable medium of any of Examples 15-18, wherein the minimized form includes having no spaces.

Example 20. The non-transitory machine-readable medium of any of Examples 15-19, wherein the minimized form includes having no carriage returns.

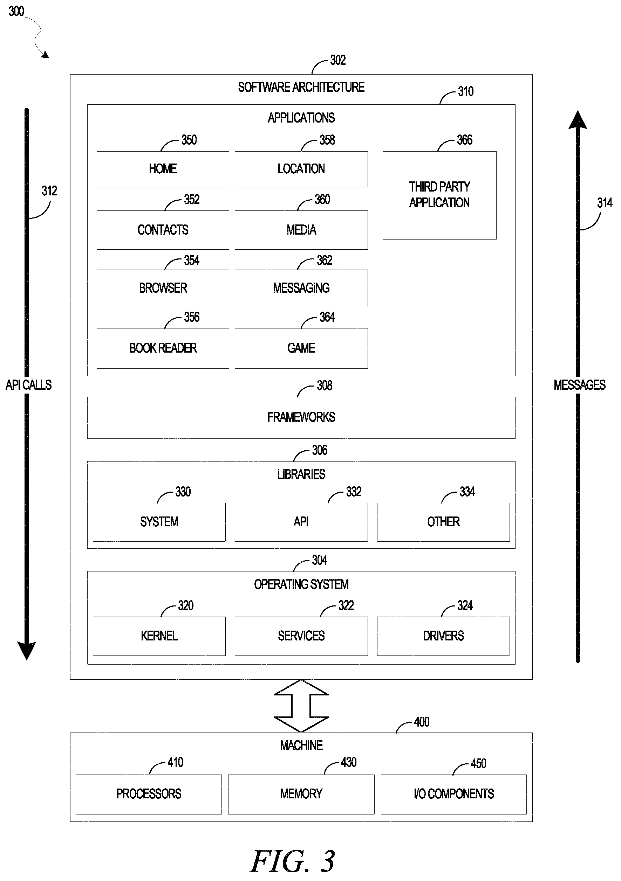

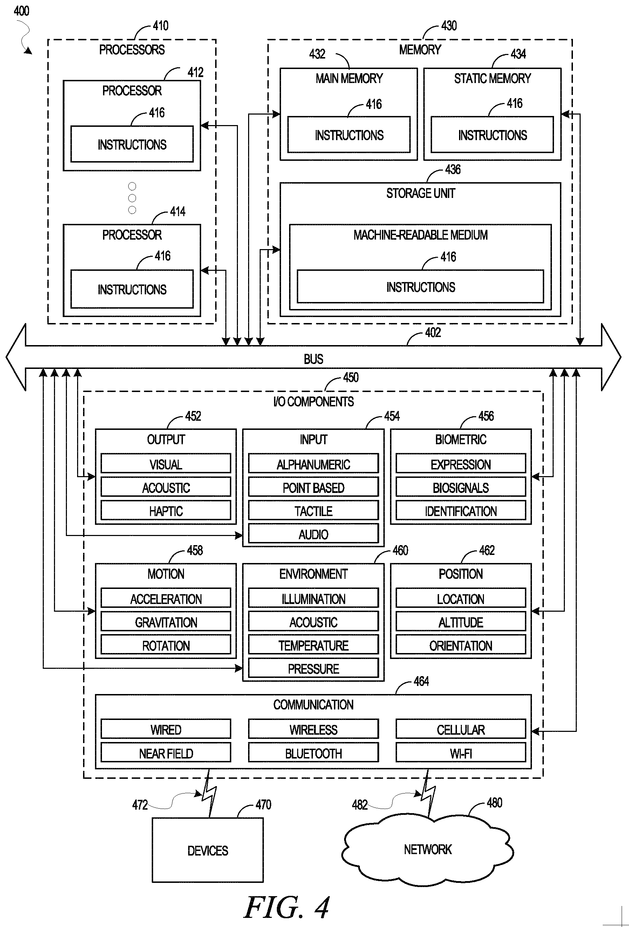

Figure 3 is a block diagram 300 illustrating a software architecture 302, which can be installed on any one or more of the devices described above. Figure 3 is merely a non-limiting example of a software architecture, and it will be appreciated that many other architectures can be implemented to facilitate the functionality described herein. In various embodiments, the software architecture 302 is implemented by hardware such as a machine 400 of Figure 4 that includes processors 410, memory 430, and input/output (I/O) components 450. In this example architecture, the software architecture 302 can be conceptualized as a stack of layers where each layer may provide a particular functionality. For example, the software architecture 302 includes layers such as an operating system 304, libraries 306, frameworks 308, and applications 310. Operationally, the applications 310 invoke API calls 312 through the software stack and receive messages 314 in response to the API calls 312, consistent with some embodiments.

In various implementations, the operating system 304 manages hardware resources and provides common services. The operating system 304 includes, for example, a kernel 320, services 322, and drivers 324. The kernel 320 acts as an abstraction layer between the hardware and the other software layers, consistent with some embodiments. For example, the kernel 320 provides memory management, processor management (e.g., scheduling), component management, networking, and security settings, among other functionalities. The services 322 can provide other common services for the other software layers. The drivers 324 are responsible for controlling or interfacing with the underlying hardware, according to some embodiments. For instance, the drivers 324 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 306 provide a low-level common infrastructure utilized by the applications 310. The libraries 306 can include system libraries 330 (e.g., C standard library) that can provide functions such as memory allocation functions, string manipulation functions, mathematic functions, and the like. In addition, the libraries 306 can include API libraries 332 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 306 can also include a wide variety of other libraries 334 to provide many other APIs to the applications 310.

The frameworks 308 provide a high-level common infrastructure that can be utilized by the applications 310, according to some embodiments. For example, the frameworks 308 provide various GUI functions, high-level resource management, high-level location services, and so forth. The frameworks 308 can provide a broad spectrum of other APIs that can be utilized by the applications 310, some of which may be specific to a particular operating system 304 or platform.

In an example embodiment, the applications 310 include a home application 350, a contacts application 352, a browser application 354, a book reader application 356, a location application 358, a media application 360, a messaging application 362, a game application 364, and a broad assortment of other applications, such as a third-party application 366. According to some embodiments, the applications 310 are programs that execute functions defined in the programs. Various programming languages can be employed to create one or more of the applications 310, structured in a variety of manners, such as object-oriented programming languages (e.g., Objective-C, Java, or C++) or procedural programming languages (e.g., C or assembly language). In a specific example, the third-party application 366 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 366 can invoke the API calls 312 provided by the operating system 304 to facilitate functionality described herein.

Figure 4 illustrates a diagrammatic representation of a machine 400 in the form of a computer system within which a set of instructions may be executed for causing the machine 400 to perform any one or more of the methodologies discussed herein, according to an example embodiment. Specifically, Figure 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein may be executed. For example, the instructions 416 may cause the machine 400 to execute the method 200 of Figure 2. Additionally, or alternatively, the instructions 416 may implement Figures 1-2 and so forth. The instructions 416 transform the general, non-programmed machine 400 into a particular machine 400 programmed to carry out the described and illustrated functions in the manner described. In alternative embodiments, the machine 400 operates as a standalone device or may be coupled (e.g., networked) to other machines. In a networked deployment, the machine 400 may operate in the capacity of a server machine or a client machine in a server-client network environment, or as a peer machine in a peer-to-peer (or distributed) network environment. The machine 400 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 may include processors 410, memory 430, and I/O components 450, which may be configured to communicate with each other such as via a bus 402. In an example embodiment, the processors 410 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 412 and a processor 414 that may execute the instructions 416. The term "processor" is intended to include multi-core processors that may comprise two or more independent processors (sometimes referred to as "cores") that may execute instructions 416 contemporaneously. Although Figure 4 shows multiple processors 410, the machine 400 may include a single processor 412 with a single core, a single processor 412 with multiple cores (e.g., a multi-core processor 412), multiple processors 412, 414 with a single core, multiple processors 412, 414 with multiple cores, or any combination thereof.

The memory 430 may include a main memory 432, a static memory 434, and a storage unit 436, each accessible to the processors 410 such as via the bus 402. The main memory 432, the static memory 434, and the storage unit 436 store the instructions 416 embodying any one or more of the methodologies or functions described herein. The instructions 416 may also reside, completely or partially, within the main memory 432, within the static memory 434, within the storage unit 436, within at least one of the processors 410 (e.g., within the processor's cache memory), or any suitable combination thereof, during execution thereof by the machine 400.

The I/O components 450 may include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 may include many other components that are not shown in Figure 4. The I/O components 450 are grouped according to functionality merely for simplifying the following discussion, and the grouping is in no way limiting. In various example embodiments, the I/O components 450 may include output components 452 and input components 454. The output components 452 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 454 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 450 may include biometric components 456, motion components 458, environmental components 460, or position components 462, among a wide array of other components. For example, the biometric components 456 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 458 may include acceleration sensor components (e.g., accelerometer), gravitation sensor components, rotation sensor components (e.g., gyroscope), and so forth. The environmental components 460 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 462 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 450 may include communication components 464 operable to couple the machine 400 to a network 480 or devices 470 via a coupling 482 and a coupling 472, respectively. For example, the communication components 464 may include a network interface component or another suitable device to interface with the network 480. In further examples, the communication components 464 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 470 may be another machine or any of a wide variety of peripheral devices (e.g., coupled via a USB).

Moreover, the communication components 464 may detect identifiers or include components operable to detect identifiers. For example, the communication components 464 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 464, such as location via Internet Protocol (IP) geolocation, location via Wi-Fi^{®} signal triangulation, location via detecting an NFC beacon signal that may indicate a particular location, and so forth.

The various memories (e.g., 430, 432, 434, and/or memory of the processor(s) 410) and/or the storage unit 436 may store one or more sets of instructions 416 and data structures (e.g., software) embodying or utilized by any one or more of the methodologies or functions described herein. These instructions (e.g., the instructions 416), when executed by the processor(s) 410, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 480 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 416 may be transmitted or received over the network 480 using a transmission medium via a network interface device (e.g., a network interface component included in the communication components 464) and utilizing any one of a number of well-known transfer protocols (e.g., HTTP). Similarly, the instructions 416 may be transmitted or received using a transmission medium via the coupling 472 (e.g., a peer-to-peer coupling) to the devices 470. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 416 for execution by the machine 400, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

Further features, aspects and embodiments are provided below in the following items:
Item 1. A system comprising:
   at least one hardware processor; and
   a computer-readable medium storing instructions that, when executed by the at least one hardware processor, cause the at least one hardware processor to perform operations comprising:
      receiving natural language text describing a request to generate text; accessing contextual information regarding the natural language text;
      generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
      passing the prompt to a large language model (LLM);
      receiving, from the LLM, generated text in the intermediate file format in minimized form; and
      parsing the generated text using a parser configured to parse files in the intermediate file format, producing parsed generated text.
Item 2. The system of Item 1, wherein the generated text is compilable computer code.
Item 3. The system of Item 1, wherein the prompt includes at least some text in the intermediate file format in minimized form.
Item 4. The system of Item 3, wherein the LLM has a hard limit on a number of input tokens it will process for a single prompt and the prompt includes fewer tokens than the hard limit due to presence of the at least some text in the intermediate file format in minimized form.
Item 5. The system of Item 1, wherein the minimized form includes having no spaces.
Item 6. The system of Item 1, wherein the minimized form includes having no carriage returns.
Item 7. The system of Item 1, wherein the intermediate file format is Javascript Object Notation (JSON).
Item 8. A method comprising:
   receiving natural language text describing a request to generate text;
   accessing contextual information regarding the natural language text;
   generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
   passing the prompt to a large language model (LLM);
   receiving, from the LLM, generated text in the intermediate file format in minimized form; and
   parsing the generated text using a parser configured to parse files in the intermediate file format, producing parsed generated text.
Item 9. The method of Item 8, wherein the generated text is compilable computer code.
Item 10. The method of Item 8, wherein the prompt includes at least some text in the intermediate file format in minimized form.
Item 11. The method of Item 10, wherein the LLM has a hard limit on a number of input tokens it will process for a single prompt and the prompt includes fewer tokens than the hard limit due to presence of the at least some text in the intermediate file format in minimized form.
Item 12. The method of Item 8, wherein the minimized form includes having no spaces.
Item 13. The method of Item 8, wherein the minimized form includes having no carriage returns.
Item 14. The method of Item 8, wherein the intermediate file format is Javascript Object Notation (JSON).
Item 15. A non-transitory machine-readable medium storing instructions which, when executed by one or more processors, cause the one or more processors to perform operations comprising:
   receiving natural language text describing a request to generate text;
   accessing contextual information regarding the natural language text;
   generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
   passing the prompt to a large language model (LLM);
   receiving, from the LLM, generated text in the intermediate file format in minimized form; and
   parsing the generated text using a parser configured to parse files in the intermediate file format, producing parsed generated text.
Item 16. The non-transitory machine-readable medium of Item 15, wherein the generated text is compilable computer code.
Item 17. The non-transitory machine-readable medium of Item 15, wherein the prompt includes at least some text in the intermediate file format in minimized form.
Item 18. The non-transitory machine-readable medium of Item 17, wherein the LLM has a hard limit on a number of input tokens it will process for a single prompt and the prompt includes fewer tokens than the hard limit due to presence of the at least some text in the intermediate file format in minimized form.
Item 19. The non-transitory machine-readable medium of Item 15, wherein the minimized form includes having no spaces.
Item 20. The non-transitory machine-readable medium of Item 15, wherein the minimized form includes having no carriage returns.

## Claims

1. A system comprising:
at least one hardware processor; and
a computer-readable medium storing instructions that, when executed by the at least one hardware processor, cause the at least one hardware processor to perform operations comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
passing the prompt to a large language model (LLM);
receiving, from the LLM, generated text in the intermediate file format in minimized form; and
parsing the generated text using a parser configured to parse files in the intermediate file format, producing parsed generated text.

2. The system of claim 1, wherein the generated text is compilable computer code.

3. The system of any one of claims 1-2, wherein the prompt includes at least some text in the intermediate file format in minimized form, particularly wherein the LLM has a hard limit on a number of input tokens it will process for a single prompt and the prompt includes fewer tokens than the hard limit due to presence of the at least some text in the intermediate file format in minimized form.

4. The system of any one of claims 1-3, wherein the minimized form includes having no spaces.

5. The system of any one of claims 1-4, wherein the minimized form includes having no carriage returns.

6. The system of any one of claims 1-5, wherein the intermediate file format is Javascript Object Notation (JSON).

7. A method comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
passing the prompt to a large language model (LLM);
receiving, from the LLM, generated text in the intermediate file format in minimized form; and
parsing the generated text using a parser configured to parse files in the intermediate file format, producing parsed generated text.

8. The method of claim 7, wherein the generated text is compilable computer code.

9. The method of any one of claims 7-8, wherein the prompt includes at least some text in the intermediate file format in minimized form, particularly wherein the LLM has a hard limit on a number of input tokens it will process for a single prompt and the prompt includes fewer tokens than the hard limit due to presence of the at least some text in the intermediate file format in minimized form.

10. The method of any one of claims 7 to 9, wherein the minimized form includes having no spaces, and/or wherein the minimized form includes having no carriage returns.

11. The method of any one of claims 7 to 10, wherein the intermediate file format is Javascript Object Notation (JSON).

12. A non-transitory machine-readable medium storing instructions which, when executed by one or more processors, cause the one or more processors to perform operations comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
passing the prompt to a large language model (LLM);
receiving, from the LLM, generated text in the intermediate file format in minimized form; and
parsing the generated text using a parser configured to parse files in the intermediate file format, producing parsed generated text.

13. The non-transitory machine-readable medium of claim 12, wherein the generated text is compilable computer code.

14. The non-transitory machine-readable medium of any one of claims 12 to 13, wherein the prompt includes at least some text in the intermediate file format in minimized form, particularly wherein the LLM has a hard limit on a number of input tokens it will process for a single prompt and the prompt includes fewer tokens than the hard limit due to presence of the at least some text in the intermediate file format in minimized form.

15. The non-transitory machine-readable medium of any one of claims 12 to 14, wherein the minimized form includes having no spaces, and/or wherein the minimized form includes having no carriage returns.

## Amended claims

### Amended claims in accordance with Rule 137(2) EPC.

1. A system (100) comprising:
at least one hardware processor (410); and
a computer-readable medium storing instructions that, when executed by the at least one hardware processor (410), cause the at least one hardware processor (410) to perform operations comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
converting the natural language text in the prompt to the intermediate file format in minimized form;
passing the prompt to a large language model (LLM) (108);
receiving, from the LLM (108), generated text in the intermediate file format in minimized form; and
parsing the generated text using a parser (110) configured to parse files in the intermediate file format, producing parsed generated text .

2. The system (100) of claim 1, wherein the generated text is compilable computer code.

3. The system (100) of any one of claims 1-2, wherein the LLM (108) has a hard limit on a number of input tokens it will process for a single prompt and the prompt includes fewer tokens than the hard limit due to presence of the natural language text in the intermediate file format in minimized form.

4. The system (100) of any one of claims 1-3, wherein the minimized form includes having no spaces.

5. The system (100) of any one of claims 1-4, wherein the minimized form includes having no carriage returns.

6. The system (100) of any one of claims 1-5, wherein the intermediate file format is Javascript Object Notation (JSON).

7. A method (200) comprising:
receiving (202) natural language text describing a request to generate text;
accessing (204) contextual information regarding the natural language text;
generating (206) a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
converting the natural language text in the prompt to the intermediate file format in minimized form;
passing (208) the prompt to a large language model (LLM) (108);
receiving (210), from the LLM (108), generated text in the intermediate file format in minimized form; and
parsing (212) the generated text using a parser (110) configured to parse files in the intermediate file format, producing parsed generated text.

8. The method (200) of claim 7, wherein the generated text is compilable computer code.

9. The method (200) of any one of claims 7-8, wherein the LLM (108) has a hard limit on a number of input tokens it will process for a single prompt and the prompt includes fewer tokens than the hard limit due to presence of the natural language text in the intermediate file format in minimized form.

10. The method (200) of any one of claims 7 to 9, wherein the minimized form includes having no spaces, and/or wherein the minimized form includes having no carriage returns.

11. The method (200) of any one of claims 7 to 10, wherein the intermediate file format is Javascript Object Notation (JSON).

12. A non-transitory machine-readable medium storing instructions which, when executed by one or more processors (410), cause the one or more processors (410) to perform operations comprising:
receiving natural language text describing a request to generate text;
accessing contextual information regarding the natural language text;
generating a prompt using the natural language text, the contextual information, and a system message, the system message including instructions to produce generated text in an intermediate file format in minimized form, the intermediate file format being a format that enables portions of a file stored in the intermediate file format to be removed without altering semantic meaning of the file;
converting the natural language text in the prompt to the intermediate file format in minimized form;
passing the prompt to a large language model (LLM) (108);
receiving, from the LLM (108), generated text in the intermediate file format in minimized form; and
parsing the generated text using a parser (110) configured to parse files in the intermediate file format, producing parsed generated text.

13. The non-transitory machine-readable medium of claim 12, wherein the generated text is compilable computer code.

14. The non-transitory machine-readable medium of any one of claims 12 to 13, wherein the LLM (108) has a hard limit on a number of input tokens it will process for a single prompt and the prompt includes fewer tokens than the hard limit due to presence of the natural language text in the intermediate file format in minimized form.

15. The non-transitory machine-readable medium of any one of claims 12 to 14, wherein the minimized form includes having no spaces, and/or wherein the minimized form includes having no carriage returns.
